# DEMANDE DE BREVET EUROPEEN

(11) **EP 3 173 981 A1**
(43) Date de publication de la demande: **31.05.2017**
(21) Numéro de dépôt: 16206017.2
(22) Date de dépôt: 02.08.2012
(51) Int. Cl.: G06K 19/06, G06K 1/12

(54) **DISPOSITIF DE PREPARATION DE CODE A LECTURE OPTIQUE**

(30) Priorité: 16.08.2011 FR 1102520
(62) Demande divisionnaire de: 12758530.5
(71) Demandeur: Mobilead, 75013 Paris (FR)
(72) Inventeur: TONNELIER, Laurent, 75013 PARIS (FR); LEBAS, Ludovic, 77000 MELUN (FR)
(74) Mandataire: Nguyen Van Yen, Christian

(57) **Abrégé**

Un dispositif de préparation de code à lecture optique comprend :
- une unité de stockage (4) propre à recevoir des données à coder, et des données de paramètres comprenant des données de présentation,
-une unité d'encodage (6), propre à produire des données de code à partir de données à coder et de données de paramètres,
-une unité d'imagerie (8), propre à produire des données définissant un plan image à partir de données de présentation et/ou de données de code,
- un ordonnanceur (10) agencé pour, en réponse à la réception de données à coder et de données de paramètres comprenant des données de présentation :
- appeler l'unité d'encodage (6) avec les données à coder et les données de paramètres
reçues pour produire des données de code
associées,
- appeler l'unité d'imagerie (8) avec les données de code associées, sélectivement avec certaines au moins des données de présentation, pour produire des données de plan d'information clair et des données de plan d'information sombre,
- appeler l'unité d'imagerie (8) avec certaines des données de présentation désignées définissant une image pour produire des données de plan image clair et des données de plan image sombre, et
- préparer un code à lecture optique à partir d'un agencement dans un ordre
prédéterminé des données de plan d'information clair, et/ou des données de plan d'information sombre, et/ou des données de plan d'image clair, et/ou des données de plan d'image sombre.

## Description

L'invention concerne le domaine de la préparation des codes à lecture optique.

Un code à lecture optique est une symbologie, c'est-à-dire une représentation graphique d'un ensemble de données. Divers formats ont été proposés pour codifier la manière de produire une image qui correspond de manière biunivoque à des données en entrée. Parmi ces formats, on compte par exemple : Datamatrix (ISO/IEC 16022), Maxicode (ISO/IEC 16023), QR-Code (ISO/IEC 18004), entre autres.

L'image produite en sortie est composée d'un ensemble de points noirs et blancs de forme carrée appelés modules. Ces points définissent un tableau à deux dimensions, également appelée matrice, à partir duquel il est possible de recouvrer les données d'origine.

Les codes à lecture optique sont très avantageux car ils permettent de stocker une quantité importante de données sur une surface limitée, et de manière hautement reproductible.

Ainsi, de nombreuses applications logicielles existent maintenant pour les téléphones (également appelés "ordiphones" ou "smartphones") et les tablettes. Ces applications permettent de lire les codes à lecture optique et d'utiliser les données qu'ils contiennent. Pour cela, ces applications utilisent le capteur optique photographique (ou caméra vidéo), et reconstituent les informations à partir de l'image ou de la séquence d'images prise.

Ce type d'application permet d'éviter d'avoir à réaliser de la reconnaissance de caractères (OCR en anglais), et permet par exemple d'offrir un lien vers un site Internet ou autre dans un magazine ou sur une devanture, sans que l'utilisateur n'ait d'adresse à taper ou d'autre effort à faire.

Un des principaux inconvénients associé aux codes à lecture optique est qu'ils sont peu esthétiques. En effet, les algorithmes correspondants aux différents formats produisent des matrices de carrés noirs et blancs qui sont dépourvues de sens pour la personne qui les regarde. Il n'est par exemple pas aisément possible d'associer à un code donné des éléments graphiques de l'univers de l'éditeur de ce code.

Par ailleurs l'association d'un visuel - que ce soit un dessin ou une photographie- avec un code à lecture optique est complexe, et rend en général le code illisible, ou limite très fortement la quantité d'informations qu'il peut contenir.

Pour ces raisons, tous les efforts de personnalisation de codes à lecture optique ont jusqu'à ce jour relevé plus du tâtonnement, par un jeu d'essais et d'échecs, jusqu'à obtention d'un code fonctionnel et assez satisfaisant esthétiquement.

Dans ce cadre, il n'existe pas aujourd'hui de solution pour produire des codes à lecture optique personnalisés graphiquement, et encore moins de tels codes qui soient adaptés à être tirés en lot, par exemple en plusieurs milliers d'exemplaires des codes semblables en apparence, mais contenant chacun des informations différentes.

L'invention vient améliorer la situation.

À cet effet, l'invention propose un dispositif de préparation de code à lecture optique qui comprend:
- une unité de stockage propre à recevoir des données à coder, et des données de paramètres comprenant des données de présentation,
- une unité d'encodage, propre à produire des données de code à partir de données à coder et de données de paramètres,
- une unité d'imagerie, propre à produire des données définissant un plan image à partir de données de présentation et/ou de données de code,
- un ordonnanceur, agencé pour, en réponse à la réception de données à coder et de données de paramètres comprenant des données de présentation :
- appeler l'unité d'encodage avec les données à coder et les données de paramètres reçues pour produire des données de code associées,
- appeler l'unité d'imagerie avec les données de code associées, sélectivement avec certaines au moins des données de présentation, pour produire des données de plan d'information clair et des données de plan d'information sombre,
- appeler l'unité d'imagerie avec certaines des données de présentation désignées définissant une image pour produire des données de plan image clair et des données de plan image sombre, et
- préparer le code à partir d'un agencement dans un ordre prédéterminé des données de plan d'information clair, des données de plan d'information sombre, des données de plan d'image clair, et des données de plan d'image sombre.

L'invention concerne également un procédé de préparation de code à lecture optique, qui comprend :
recevoir des données à coder, et des données de paramètres comprenant des données de présentation,
calculer des données de code à partir de données à coder et de données de paramètres,
produire des données de plan d'information clair et/ou des données de plan d'information sombre à partir des données de code, et sélectivement à partir de certaines au moins des données de présentation,
produire des données de plan image clair et/ou des données de plan image sombre à partir de certaines au moins des données de présentation définissant une image, et
préparer le code à partir d'un agencement dans un ordre prédéterminé des données de plan d'information clair et/ou des données de plan d'information sombre, et/ou des données de plan d'image clair, et/ou des données de plan d'image sombre.

D'autres caractéristiques et avantages de l'invention apparaîtront mieux à la lecture de la description qui suit, tirée d'exemples donnés à titre illustratif et non limitatif, tirés des dessins sur lesquels :
la figure 1 représente un schéma d'un dispositif selon l'invention,
la figure 2 représente un diagramme schématique de fonctionnement du dispositif de la figure 1,
la figure 3 représente un algorithme de préparation de codes à lecture optique mis en oeuvre par le dispositif de la figure 1,
la figure 4 représente un exemple de réalisation d'une première opération de la figure 3,
la figure 5 représente un diagramme schématique d'une deuxième opération de la figure 3,
la figure 6 représente une troisième opération de la figure 3,
la figure 7 représente un exemple de mise en oeuvre d'une quatrième opération de la figure 3,
la figure 8 représente un exemple de mise en oeuvre d'un autre mode de réalisation, et
la figure 9 représente un exemple de mise en oeuvre d'encore un autre mode de réalisation.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

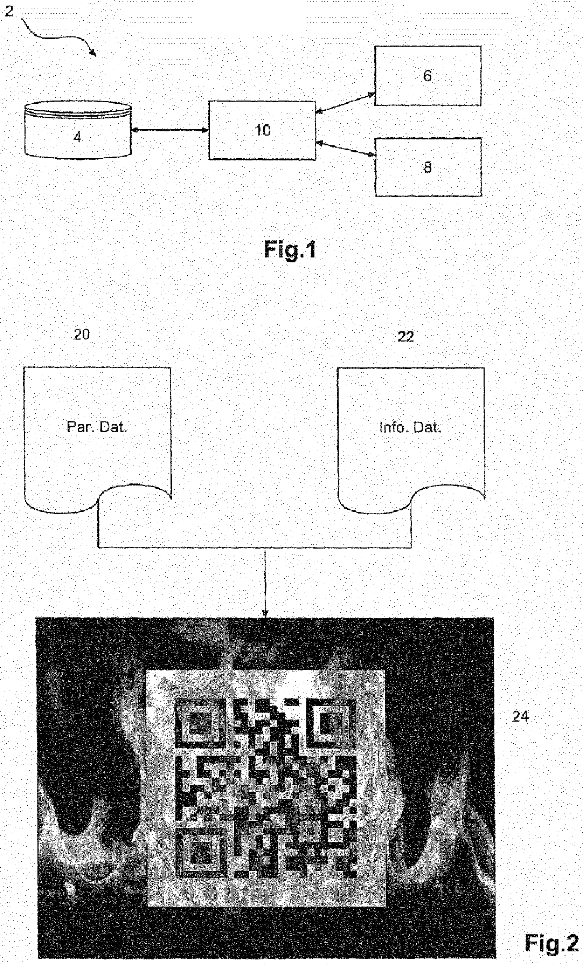

La figure 1 représente un dispositif selon l'invention. Comme on peut le voir sur cette figure, le dispositif 2 comprend une unité de stockage 4, une unité d'encodage 6, une unité d'imagerie 8 et un ordonnanceur 10.

L'unité de stockage 4 est dans l'exemple décrit ici un support de stockage classique, qui peut être un disque dur à plateau ou à mémoire flash (SSD), de la mémoire flash ou ROM, un support de stockage physique comme un disque compact (CD), un disque DVD, un disque Blu-Ray, ou tout autre type de support de stockage physique. L'unité de stockage 4 peut également être déportée, sur un support de stockage réseau (SAN), ou sur Internet, ou d'une manière générale dans le "cloud".

L'unité d'encodage 6, l'unité d'imagerie 8 et l'ordonnanceur 10 sont dans l'exemple décrit ici des éléments logiciels exécutés par un ordinateur qui les contient. Cependant, ils pourraient être exécutés de manière répartie sur plusieurs ordinateurs, ou être réalisés sous la forme de circuits imprimés (ASIC, FPGA ou autre), ou de microprocesseurs dédiés (NoC ou SoC).

L'ordonnanceur 10 commande sélectivement l'unité d'encodage 6 et l'unité d'image 8, et accède à l'unité de stockage 4 pour mettre en oeuvre les traitements selon l'invention.

La figure 2 représente le traitement effectué par le dispositif 2. Comme on peut le voir sur cette figure, le dispositif 2 reçoit d'une part des données paramètres 20 et d'autre part des données à coder 22, et produit en sortie un code 24.

Les données de paramètres 20 sont toutes données de présentation permettant de personnaliser le code à lecture optique à produire, ainsi que tout paramètre spécifique à l'exécution du dispositif 2. Par exemple, les données de paramètres 20 peuvent comprendre, de manière non limitative, des données d'arrière-plan de code, des données d'avant-plan de code, des données d'image, des données de motif, des données de transformation de motif, ou autres données. Les paramètres spécifiques à l'exécution peuvent comprendre des données de type de code à produire, des données de lot, des données de réserve, ou d'autres données. La nature et la fonction de ces données seront précisées dans la suite.

Les données à coder 22 sont les données que doit contenir le code 24. Ces données peuvent former un fichier de carte de visite, ou une adresse Web, ou toute autre information définie par une ou plusieurs chaînes de texte, binaire, ou autre.

Bien que le code 24 soit représenté sur la figure 2 dans sa forme finale telle qu'elle sera vue par une personne physique, il faut comprendre que le code 24 produit par le dispositif 2 peut être tout élément permettant d'obtenir un code à lecture optique fonctionnel.

Ainsi, le code 24 peut être disponible sous la forme d'un dessin vectoriel, sous la forme d'une image bitmap, ou encore sous la forme d'un document dans lequel plusieurs calques sont définis, mais non encore fusionnés, ainsi que sous toute forme de données assemblables pour obtenir ces éléments.

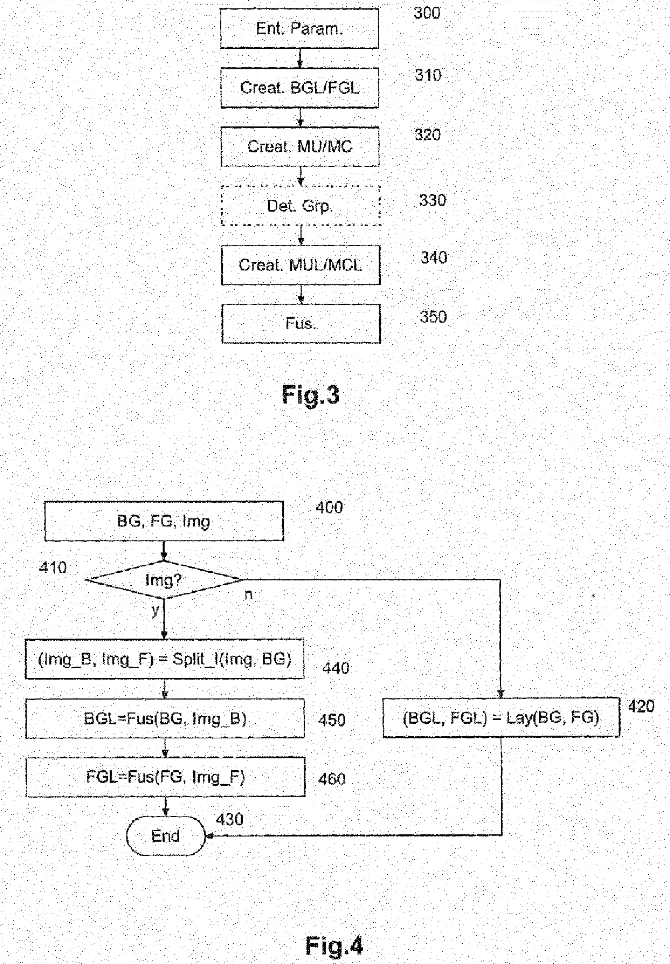

La figure 3 représente un diagramme en exemple d'un algorithme mis en oeuvre par le dispositif 2 pour préparer un code à lecture optique.

Cet algorithme commence avec une opération 300 dans laquelle les données de paramètres 20 sont entrées par l'utilisateur, soit directement, soit par indication de l'emplacement d'une source contenant ces données. Ce sont ces données qui vont conditionner la préparation du code 24 et l'effet de rendu définitif.

Comme on l'a vu, ces données peuvent comprendre des données d'arrière-plan de code, des données d'avant-plan de code, des données d'image, des données de motif, des données de transformation de motif, des données de type de code à produire, des données de lot et des données de réserve.

En effet, la Demanderesse a identifié plusieurs manières de personnaliser graphiquement un code à lecture optique, par le biais par exemple de l'ajout d'un arrière-plan ou d'un avant-plan, ou par l'utilisation d'un ou plusieurs motifs pour la réalisation des modules.

Les données d'arrière-plan et les données d'avant-plan peuvent comprendre par exemple un fond de couleur choisie, sous forme bitmap ou vectorielle, ou un dégradé. Pour un code donné, **il** est possible que seules des données d'arrière-plan, ou que des données d'avant-plan soient prévues.

En effet, la couleur la plus fréquemment choisie pour représenter une information "0" est la couleur blanche, ce qui revient à avoir un arrière-plan ou un avant-plan transparent. Cependant, dans le cas où un arrière-plan et un avant-plan sont prévus, il est -nécessaire que l'un des deux soit détecté comme "clair", c'est-à-dire comme une information "0", et que l'autre soit détecté comme "sombre", c'est-à-dire comme une information "1".

Les données d'image peuvent comprendre toutes données de type graphique, sous forme bitmap ou vectorielle, qui permet de restituer une ou plusieurs photographies, ou dessins associés à une entreprise, comme un logo, un modèle, une marque figurative, ou autre. Comme on le verra par la suite, les dimensions de l'image associée aux données d'image peuvent être quelconques par rapport aux dimensions voulues pour le code 24, c'est-à-dire qu'elles peuvent être plus petites, identiques ou plus grandes.

Les données de motif peuvent comprendre toutes données de type graphique, sous forme bitmap ou vectorielle, qui pourront être utilisées pour former des motifs destinés à représenter les modules ou groupes de modules qui constituent l'information dans les codes à lecture optique.

Les données de transformation de motif peuvent comprendre toute fonction et paramètre permettant d'appliquer une transformation géométrique et/ou optique à un motif. Parmi ces transformations, on compte par exemple la rotation autour d'un axe, la translation, l'homothétie, la projection de lumière, la projection d'ombres, le flou, la distorsion, la transparence, la turbulence, etc., ou une composée de ces transformations.

L'utilisation des données de motif et des données de transformation pour former des motifs originaux est possible grâce à la tolérance intrinsèque de détection des informations. En effet, lorsqu'un code à lecture optique est décodé, **il** est d'abord découpé en une pluralité de zones correspondant à chacune des cases de la matrice. Ensuite, pour chaque zone, on détermine si elle est sombre ou claire, ce qui différencie une information "1" et une information "0".

Il ressort de cela que presque n'importe quel élément graphique peut être utilisé pour représenter un module, dès lors que cet élément présente un profil de couleur qui sera décodé correctement, et que cet élément occupe une place suffisante dans la zone concernée.

Par exemple, un coeur rouge pourra être utilisé pour remplacer les modules noirs, dès lors que ces coeurs couvrent une portion suffisante de chaque zone. Ce principe s'applique similairement avec les transformations décrites plus haut. Il ressort de ce qui précède qu'un motif peut également "dépasser" de la zone à laquelle il correspond, dès lors que ce motif ne change pas les informations de la ou des zones dans lesquelles il déborde.

La notion de "clair" et de "sombre" découverte par la Demanderesse est cruciale. Il est en effet depuis longtemps considéré que, pour produire un code à lecture optique fonctionnel de manière fiable, c'est-à-dire sans risquer trop d'erreurs, les modules doivent être totalement noirs pour être détectés comme information "1", et totalement blancs pour être détectés comme information "0". De plus, **il** est à ce jour également considéré comme indispensable que les modules soient de forme carrée, et soient identiques entre eux au sein d'un code donné. En effet, si c'est conditions ne sont pas remplies, il devient nécessaire de faire plusieurs séries d'approximations pour obtenir un code fonctionnel.

Par exemple, l'intégration d'une image, même de taille modeste est réalisée par tâtonnements : l'image est intégrée, en général au milieu du code, puis le code est testé. Ce test est en général négatif. Alors l'image est modifiée, souvent par rognage, puis l'opération est répétée, jusqu'à obtention d'un code fonctionnel et plus ou moins esthétique.

La démarche relève clairement plus de l'art que de l'infographie. Et il est impossible de créer un lot de supports qui présentent des codes à lecture optique à la fois personnalisés pour des personnes, par exemple avec leur carte de visite, et à la fois personnalisés graphiquement, par exemple avec le logo de leur entreprise.

La Demanderesse a découvert que ces concepts sont erronés, et qu'il convient en fait de distinguer les parties "claires", et les parties "sombres". En effet, la Demanderesse a découvert qu'il est possible de réaliser les équivalences suivantes :
- une partie "claire" sera détectée comme une information "0", et
- une partie "sombre" sera détectée comme une information "1".

Dans ce qui suit, des données "0" ou "claires" désigneront donc un module portant une information "0", et des données "1" ou "sombres" désigneront donc un module portant une information "1".

Cette découverte est fondamentale, et a permis à la Demanderesse de produire des codes à lecture optique personnalisés, dans lesquels l'élément graphique utilisé par représenter les modules n'est plus limité à un carré noir occupant un espace de dimensions données, mais presque n'importe quel élément graphique présentant des propriétés appropriées. Ces codes à lecture optique ont également pu être personnalisés par l'intégration libre d'éléments graphiques non liés aux modules, comme des images.

Les données de type de données de code 24 à produire permettent de préciser le type de code 24 produit en sortie tel que décrit plus haut : image bitmap, dessin vectoriel, document à calques non aplanis, etc.

Les données de lot permettent d'indiquer que plusieurs codes doivent être réalisés avec les mêmes paramètres, et avec des données à coder 22 différentes. Il devient ainsi possible d'imprimer des supports avec des informations personnalisées grâce au code à lecture optique, mais avec le même type de personnalisation graphique, par lot.

Dans le cas d'un traitement par lot, seules les données à insérer dans le code changent, mais les données de personnalisation graphique et le rendu visuels restent les mêmes. Comme on le verra plus bas, l'invention permet de produire de manière fiable une quantité importante de codes personnalisés similairement d'un point de vue graphique, et différemment du point de vue des données, et d'une manière fiable, c'est-à-dire sans erreur ni besoin de tâtonner.

Les données de réserve permettent d'indiquer le nombre de modules qui sont réservés autour du code. Classiquement, les données de réserve sont de deux ou quatre modules contenant une information "claire" ou "0", autour de la matrice d'informations, c'est-à-dire autour du code.

Une fois les paramètres définis, l'algorithme se poursuit dans une opération 310 avec la création d'un calque d'arrière-plan et d'un calque d'avant-plan. En effet, la Demanderesse a découvert qu'il était possible de personnaliser les codes à lecture optique d'une manière extrêmement riche et libre, dès lors que certaines règles sont respectées. Ces règles concernent principalement la préservation de la détection de l'information "claire" et "sombre".

La figure 4 représente un exemple de mise en oeuvre de l'opération 310. Dans une opération 400, les données d'avant-plan, les données d'arrière-plan et les données d'image associées au code à préparer sont récupérées.

Ensuite, une opération 410 teste la présence de données d'image. En effet, si ces données sont absentes, alors le calque d'arrière-plan et le calque d'avant-plan sont directement réalisés dans une opération 420 au moyen d'une fonction Lay(), et l'opération 310 se termine en 430. S'il n'y a pas de données d'arrière-plan ou de données d'avant-plan, la fonction Lay() n'effectue rien, ou retourne un calque transparent.

Si des données d'image ont été associées, alors une opération une fonction Split_I() est exécutée dans une opération 440. La fonction Split_I() reçoit comme arguments les données d'image et les données d'arrière-plan.

La fonction Split_I() va produire deux calques à partir des données d'image, en fonction du type d'informations associé aux données d'arrière-plan. Ainsi, si les données d'arrière-plan correspondent à des informations "sombres", alors la fonction Split_I() crée un calque Img_B qui contient les données d'image qui correspondent à des informations "sombres", et un calque Img_F qui contient les données d'image qui correspondent à des informations "claires".

Un exemple de méthode de réalisation de la fonction Split_I() est de prendre les données d'image, et de les découper conformément à la matrice de modules, pour définir un ensemble de zones dans les données d'image. Ensuite, chaque zone est testée pour déterminer si elle contient les données d'image qui correspondent à des informations "claires", ou des données d'image qui correspondent à des informations "sombres". Enfin, les calques Img_B et Img_F sont reconstitués sur la base de cette détermination.

Enfin, un calque d'arrière-plan BGL est calculé au moyen d'une fonction Fus() dans une opération 450, un calque d'avant-plan FGL est calculé au moyen de la fonction Fus() dans une opération 460, et l'opération se termine dans en 430.

La fonction Fus() est exécutée en aplanissant les plans qui lui sont passés en arguments, dans l'ordre de soumission. Dans l'exemple décrit ici, le calque Img_B est aplani sur le calque BG, et le calque Img_F est aplani sur le calque FG.

Une fois les calques d'arrière-plan et d'avant-plan générés, la préparation du code à lecture optique se poursuit dans une opération 320 de créations de matrices de données.

L'opération 320 comprend deux étapes. Dans une première étape, les données à coder 22 sont transformées en matrice d'informations conformément au format de code retenu. Ensuite, une matrice complémentaire est générée, dont le rôle sera explicité ci-dessous.

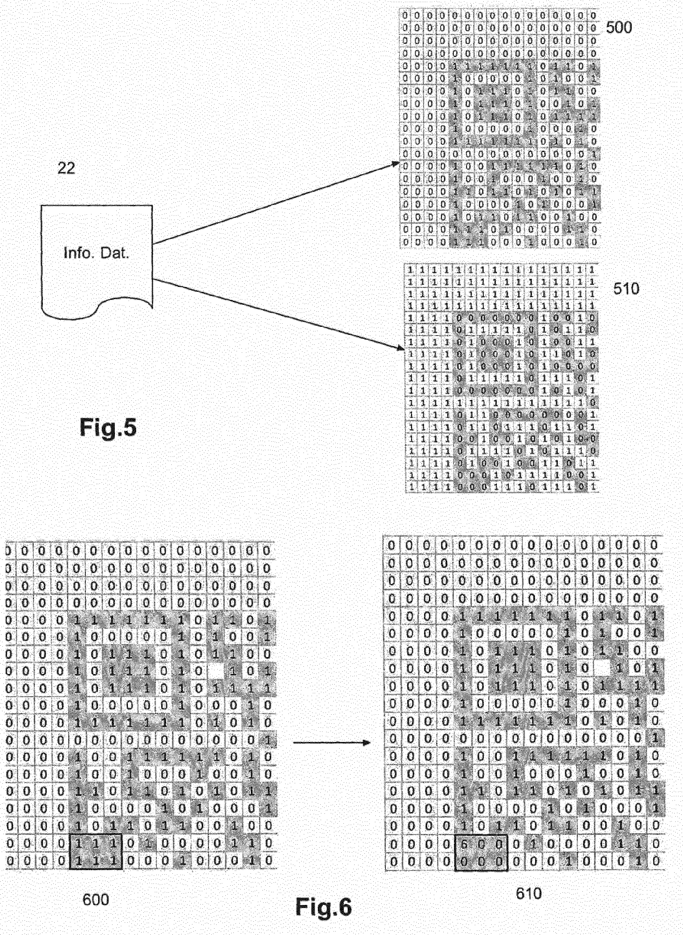

La figure 5 représente un diagramme schématique de mise en oeuvre de l'opération 320, où la matrice d'information est référencée 500, et la matrice complémentaire est référencée 510. Dans cette opération, si des données de réserve sont définies, elles sont intégrées aux matrices, qui sont ici partiellement représentées.

Il faut noter que, bien que tous les coefficients soient représentés sur la figure 5, il n'a y a que ceux qui ne sont pas nuls qui seront effectivement traités dans la suite. Il serait également possible de représenter les matrices 500 et 510 sous la forme d'une suite d'indices qui indiquent les emplacements des coefficients non nuls, qui sont les emplacements dans le code auxquels il faut représenter les modules. Les données qui représentent les matrices 500 et 510 sont les données de code. L'exemple décrit ici est adapté au format QR-Code. D'autres formats de code induiront des matrices différentes.

Ensuite, une opération optionnelle 330 est exécutée. L'opération 330 est une opération de détection de groupe. En effet, en fonction du motif retenu pour former le code, il peut être intéressant de regrouper plusieurs informations de type "1" ou de type "0" qui sont contigües.

Ainsi, dans un exemple mis en oeuvre par la Demanderesse, les motifs sont des traits de crayon papier. Lorsque plusieurs traits sont alignés verticalement ou horizontalement, il peut être intéressant de les regrouper en un seul long trait continu. De même, lorsqu'une image est utilisé comme motif, par exemple un hamburger, il peut être intéressant de regrouper des informations identiques qui forment un carré, afin de les remplacer par une seule image sur lequel est réalisée une homothétie. En variante, d'autres formes, par exemple des formes similaires à celles des éléments de type Tetris (marque déposée) peuvent être détectées et utilisées.

L'opération 330 vient faciliter cette mise en oeuvre en réalisant la détection de ces groupes dans les matrices produites avec l'opération 320. La figure 6 représente un diagramme schématique de mise en oeuvre de l'opération 330, où la matrice avant détection est référencée 600, et la matrice après détection est référencée 610. Dans l'exemple décrit ici, un groupe de coefficient est remplacé par un unique coefficient comprenant une information de détection de groupe, et les autres coefficients sont rendus nuls. Comme pour la figure 5, les matrices 600 et 610 sont représentées en parties, et dans la matrice 600, un bloc rectangulaire de taille 3*2 modules a été identifié. D'autres variantes pourront être mises en oeuvre.

L'opération 330 de détection de groupe est en général réalisée sur la matrice d'information 500, car les modules correspondant à des informations "1" sont généralement réalisés avec une couleur "sombre".

Dans l'exemple décrit ici, seule la matrice 500 fait l'objet de détection de groupe, et la matrice 510 reste inchangée. Dans des variantes, c'est la matrice 510 qui pourrait faire l'objet de l'opération 330, ou les deux matrices 500 et 510.

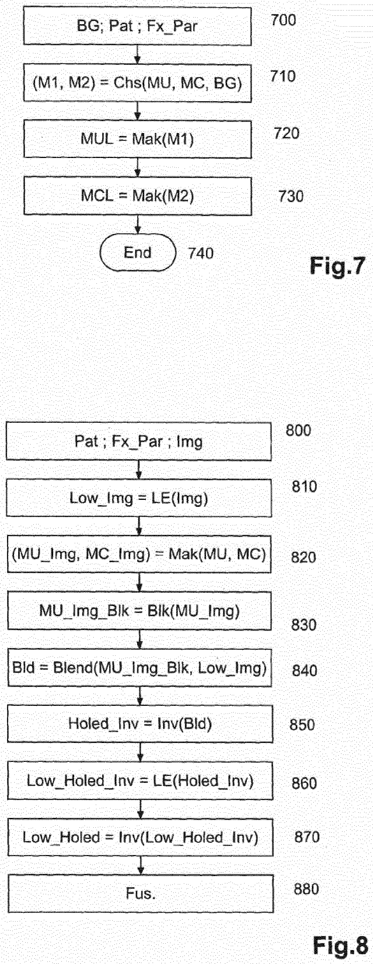

Ensuite, une opération 340 est réalisée, dans laquelle un calque d'information utile MUL et un calque d'information complémentaire MCL sont générés. La figure 7 représente un exemple de mise en oeuvre de cette opération.

Cette opération commence en 700 par la récupération des données d'arrière-plan BG, des données de motif Pat, et des données de transformation Fx_Par. Dans l'exemple décrit ici, les données de motif Pat et de transformation Fx_Par sont des tableaux.

Ensuite une fonction Chs() est exécutée dans une opération 710, afin de déterminer la matrice qui va servir de base à la préparation du calque d'information. En effet, si le calque d'arrière-plan BGL correspond à des informations "claires", alors c'est la matrice d'information utile MU. Dans le cas contraire, c'est la matrice d'information complémentaire MC qui est utilisée.

La fonction Chs() reçoit donc comme arguments la matrice d'information utile MU, la matrice d'information complémentaire MC (éventuellement telles que modifiées après l'opération 330), ainsi que le calque d'arrière-plan BGL. La fonction Chs() retourne deux matrices Ml et M2, la matrice Ml comprenant la matrice MU si les informations du calque d'arrière-plan BGL sont claires, et à la matrice MC sinon. En l'absence de calque d'arrière-plan, ou si ce calque est transparent, alors la matrice Ml est la matrice MU.

Ensuite, dans une opération 720, la matrice Ml est transformée en plan d'informations par une fonction Mak().

Dans un premier temps, la fonction Mak() transforme la matrice Ml en un tableau dans une fonction Ml_Tab(). La fonction Ml_Tab() reçoit la matrice Ml de l'opération 710 et les données de motif Pat et de transformation Fx_Par comme arguments, et retourne un tableau Ml_Tab[] dans lequel chaque élément comprend un ou plusieurs indices de zones de la matrice Ml.

Dans l'exemple décrit ici, chaque élément du tableau Ml_Tab[] est une matrice de dimensions identiques à celle de Ml. Dans chaque matrice Ml_Tab[i], seuls certains coefficients sont non nuls, et correspondent à des coefficients non nuls de Ml. Lorsqu'un coefficient d'une matrice Ml_Tab[i] est non nul, **il** est nul dans toutes les autres matrices Ml_Tab[i], et la somme de toutes les matrices Ml_Tab[i] donne Ml.

L'attribution des coefficients non nuls dans chaque matrice Ml_Tab[i] peut être faite selon un ordre préétabli, ou de manière aléatoire, et peut être réalisé en fonction des données de motif Pat et de transformation Fx_Par. Dans ce deuxième cas, cela signifie que, lors d'un traitement par lot, tous les codes produits auront une forme visuelle commune, mais qu'ils seront pour autant totalement différents les uns des autres. Chaque module de Ml se retrouve donc dans une matrice du tableau Ml_Tab[], et dans une seule uniquement.

Cela rend possible de traiter séparément toutes les informations de la matrice Ml en utilisant des motifs variés et/ou en appliquant des effets différents pour chaque coefficient non nul de Ml. Dans le cas où l'opération 330 est exécutée, le choix du motif peut dépendre de l'information de détection de groupe, et notamment de la taille du groupe qu'elle désigne.

Dans un second temps, la fonction Mak() génère le calque d'information utile MUL à partir du tableau Ml_Tab[], et des données de motif Pat et de transformation Fx_Par, pour représenter les modules avec les éléments désignés par les données de motifs Pat en fonction des données de transformation Fx_Par, aux emplacements désignés par les coefficients non nuls des matrices Ml_Tab[i].

Dans l'exemple décrit ici, l'application des données de transformation Fx_Par est réalisée de telle sorte que le barycentre des données de motif Pat soit préservé. Cela garantit que les données de motif avant application des données de transformation Fx_Par et les données de motif après application des données de transformation Fx_Par seront détectées de manière identique par l'application de lecture du code.

Dans la mise en oeuvre la plus simple, il n'y a qu'un type de motif et pas de transformation. Dans ce cas, le tableau Ml_Tab[] contient une unique matrice identique à la matrice Ml, et les modules sont représentés aux emplacements indiqués par la matrice Ml avec les données de motif.

Ensuite, un calque d'information complémentaire MCL est créé de manière similaire dans une opération 730 par la fonction Mak(M2), et l'opération 340 se termine en 740. En variante, les opérations 720 et 730 pourraient retourner non pas des calques, mais des données de déclaration de ces calques, dans le cas où un moteur graphique déclaratif est utilisé.

Une fois que l'ensemble des calques d'arrière-plan, d'avant-plan, et d'information ont été créés, l'opération 350 les traite afin de fournir le code 24 comme prévu dans les données de type de données. Ainsi, si ces données indiquent qu'un code 24 sous forme d'image aplanie est demandé, alors cette opération aplanit le calque d'arrière-plan, le calque d'information utile, le calque d'avant-plan, et le calque d'information complémentaire. Si c'est une image non aplanie qui est demandée, alors ces calques sont fournis directement etc. Ici encore, le code 24 peut être défini par un ensemble de données de déclaration de calques dans le cas où un moteur graphique déclaratif est utilisé.

Par ailleurs, certaines des opérations décrites ci-dessus peuvent être optionnelles ou réalisées dans un ordre différent afin d'obtenir un meilleur rendu visuel.

Par exemple, si l'on considère les informations complémentaires, il est fréquent qu'il soit désiré que ces informations soient invisibles, c'est-à-dire transparentes. Plus précisément, il n'est réellement nécessaire d'afficher les informations complémentaires que lorsqu'elles correspondent à une information "claire" qui est située dans une zone du code dans laquelle un arrière-plan ou un avant-plan "sombre" a été appliqué. Lorsque de telles zones n'existent pas, l'application du calque d'information complémentaire peut être omise.

Cela est renforcé par le fait qu'il existe plus souvent des données d'arrière-plan, que des données d'avant-plan. Il en résulte que le calque d'avant-plan FGL est souvent réduit à la partie Img_F de l'image, ce qui réduit la chance que de telles zones existent.

De plus on voit à partir de ce qui précède qu'il est aisé de produire en masse des codes à lecture optique très personnalisés grâce à l'invention. En effet, comme la production du code prévoit de préserver les informations "claires" et "sombres", quelle que soit la personnalisation graphique envisagée, il est certain que les codes produit dans le cadre de l'invention sont fonctionnels. Cela est très avantageux, et impossible dans l'état de l'art.

La Demanderesse a également découvert une autre manière de produire un code à lecture optique de manière très avantageuse.

La figure 8 représente une première variante de cette manière.

Dans une opération 800, les données d'image, les données de motif, les données de transformation, et les données des matrices MU et MC sont reçues.

Ensuite, dans une opération 810, une fonction LE() est appliquée sur les données d'image. La fonction LE() a pour fonction de modifier l'image Img représentée par les données d'image en la rendant progressivement transparente. En résultat, des données Low_Img sont obtenues, qui représentent une image dans laquelle toutes les données de l'image originale dont la luminosité correspond à une information "claire" ont été supprimées en les rendant progressivement transparentes.

En variante, cette fonction pourrait rendre transparents tous les éléments de l'image en entrée dont la luminosité est inférieure à un seuil choisi, et opaques tous les éléments de l'image en entrée dont la luminosité est supérieure à ce seuil choisi.

Ensuite, dans une opération 820, des données MU_Img et MC_Img sont calculées par la fonction Mak(MU, MC), puis les données MU_Img sont rendues noires dans une opération 830 par une fonction Blk(). La fonction Blk() vient transformer tous les éléments de l'image MU_Img qui ne sont pas strictement blancs en éléments noirs, pour donner des données définissant une image MU_Img_Blk.

Après, les données MU_Img_Blk sont superposées aux données Low_Img dans une opération 840, puis une opération d'inversion de couleur est réalisée dans une opération 850 par une fonction Inv() pour produire des données Holed_Inv. Les données Holed_Inv contiennent de ce fait l'inverse calorimétrique des données de l'image Img percées de trous transparents correspondant aux emplacements des modules "sombres" de la matrice MU.

Dans une opération 860, la fonction LE() est appliquée aux données Holed_Inv, et les données résultantes High_Holed_lnv sont à nouveau inversées par la fonction lnv() dans une opération 870, pour produire des données High_Holed. Les données High_Holed correspondent en pratique aux parties "sombres" de l'image lmg dans lesquelles les modules correspondant aux informations "claires" ont été représentés.

Enfin, dans une opération 880, les calques des données MU_Img, Low_Img, MC_Img et High_Holed sont aplanis pour produire le code 24.

Comme décrit précédemment, toutes ces opérations peuvent produire un code 24 sous forme d'image aplanie, sous forme de groupe ordonné de calques, ou sous la forme d'un ensemble de données de déclaration de calques dans le cas où un moteur graphique déclaratif est utilisé.

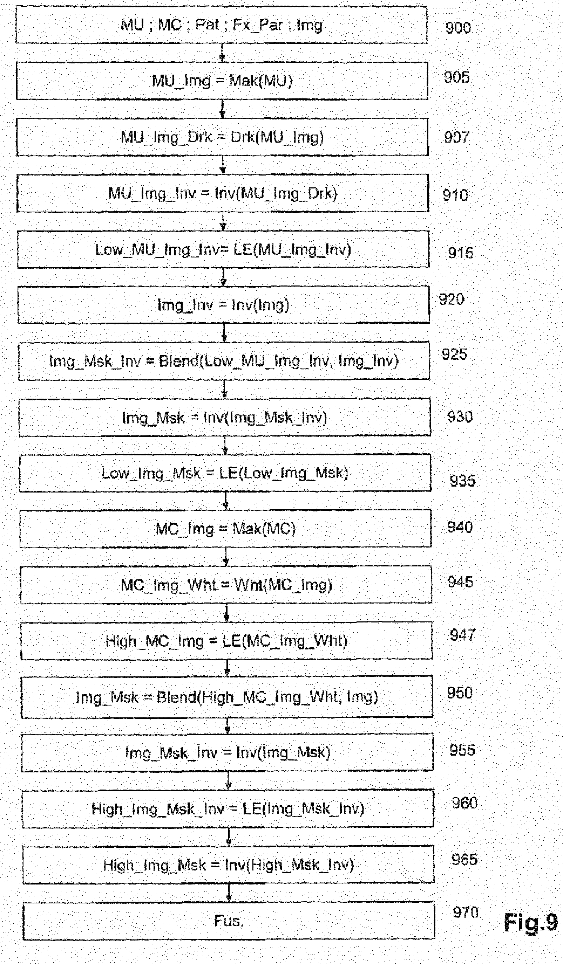

La figure 9 représente une variante de la figure 8.

Dans une opération 900, les données d'image, les données de motif, les données de transformation, et les données des matrices MU et MC sont reçues.

Dans un premier temps, cette variante vise à calculer les parties de l'image Img qui sont "sombres" et qui correspondent à des emplacements de modules "sombres" dans la matrice MU.

Pour cela, dans une opération 905, les données MU_Img sont calculées par la fonction Mak(MU), puis les données MU_Img sont rendues noires dans une opération 907 par la fonction Blk() pour donner des données définissant une image MU_Img_Blk.

Ensuite, la fonction Inv() est appliquée aux données MU_Img_Blk dans une opération 910 pour obtenir des données MU_Img_Inv. Typiquement, l'image MU_Img_Inv correspond à la matrice MC avec les éventuelles données de réserve, dans laquelle les modules "clairs" sont représentés en noir, et dans laquelle les modules "sombres" sont représentés en blanc. La fonction LE() est ensuite appliquée aux données MU_Img_Inv dans une opération 915, afin de rendre opaques les modules "clairs" et transparents les modules "sombres". Les données résultantes sont appelées Low_MU_Img_Inv.

Dans une opération 920, les données d'image de l'image Img sont inversées colorimétriquement par la fonction Inv() pour obtenir des données Img_Inv, puis les données Low_MU_Img_Inv sont fusionnées avec les données Img_Inv dans une opération 925. En résultat, on obtient des données de masque Img_Msk_Inv qui contiennent l'inverse calorimétrique des parties de l'image Img qui correspondent aux modules "sombres" de MU.

Afin d'obtenir une image qui comprend les parties de l'image Img qui sont "sombres" et qui correspondent à des emplacements de modules "sombres" dans la matrice MU, la fonction Inv() est appliquée aux données Img_Msk_Inv dans une opération 930, puis la fonction LE() est appliquée aux données Img_Msk résultantes dans une opération 935, ce qui donne en sortie des données Low_Img_Msk.

Dans un deuxième temps, cette variante vise à calculer les parties de l'image Img qui sont "claires" et qui correspondent à des emplacements de modules "sombres" dans la matrice MU.

Pour cela, dans une opération 940, les données MC_Img sont calculées par la fonction Mak(MC), puis les données MC_Img sont rendues blanches dans une opération 945 par une fonction Wht(). La fonction Wht() vient transformer tous les éléments de l'image MC_Img qui ne sont pas strictement noirs en éléments blancs, pour donner des données définissant une image MC_Img_Wht.

Ensuite, la fonction LE() est appliquée aux données MC_Img_Wht dans une opération 947 pour obtenir des données High_MC_Img correspondant à une image dans laquelle les modules "sombres" de MU sont opaques, et les modules "clairs" de MC sont transparents. Ensuite, dans une opération 950, les données High_MC_Img sont fusionnées avec les données d'image de l'image Img, pour obtenir des données lmg_Msk.

Les données Img_Msk contiennent les parties de l'image Img qui correspondent aux modules "clairs" de MC. Afin d'obtenir une image qui comprend les parties de l'image Img qui sont "claires" et qui correspondent à des emplacements de modules "clairs" de la matrice MC, la fonction Inv() est appliquée aux données Img_Msk dans une opération 955, puis la fonction LE() est appliquée aux données Img_Msk_Inv résultantes dans une opération 960, et la fonction Inv() est à nouveau appliquée dans une opération 965, ce qui donne en sortie des données High_Img_Msk.

Concrètement, les données Low_Img_Msk contiennent toutes les données "sombres" de l'image Img, telle que masquée par l'image représentant les modules "sombres" de la matrice MU, et les données High_Img_Msk contiennent toutes les données "claires" de l'image Img, telle que masquée par l'image représentant les modules "clairs" de la matrice MC.

Pour obtenir le code 24, il suffit alors de superposer les plans dans une opération 970, du plus profond vers le plus en avant :
- données MU_Img,
- données Low_Img_Msk,
- données MC_Img, et
- données High_Img_Msk.

En variante, les données d'image de l'image Img peuvent être utilisées comme arrière-plan au code 24 ainsi produit. En effet, on a vu que les modules n'ont pas besoin d'occuper l'intégralité de l'espace qui leur est accordé dans le code, sans que cela affecte la qualité du code 24 produit.

Ainsi, la Demanderesse a découvert que, dans le cadre de la production de codes avec une image assez grande comme personnalisation graphique, il est avantageux et esthétique d'utiliser des modules dont la taille est légèrement inférieure à l'emplacement qui leur est réservé dans le code 24. En effet, avec des modules qui n'occupent pas tout leur emplacement, on obtient des modules "non-jointifs", ce qui se traduit visuellement par un interstice entre les lignes et colonnes de modules, ce qui rend très bien visuellement.

Cependant, comme on vient de le voir, la variante de la figure 9 découpe précisément l'image aux contours des modules, tels qu'ils remplissent les emplacements qui leur sont dédiés. Par conséquent, la superposition des plans décrits plus haut laisse dans ce cas les interstices vides. Le fait de venir réutiliser l'image Img en fond vient remplir ces interstices sans corrompre le code 24, et permet d'améliorer encore son rendu visuel.

Ici encore, le code 24 peut être fourni comme prévu dans les données de type de code. Ainsi, si ces données indiquent qu'un code 24 sous forme d'image aplanie est demandé, alors cette opération aplanit les plans dans l'ordre défini plus haut. Si c'est une image non aplanie qui est demandée, alors ces calques sont fournis directement etc. Ici encore, le code 24 peut être défini par un ensemble de données de déclaration de calques dans le cas où un moteur graphique déclaratif est utilisé.

Dans ce qui précède, il a été alternativement fait référence à des aplanissements et des fusions. Ces opérations visent autant un aplanissement classique des plans, que la fusion avec gestion de canal alpha, comme approprié. De plus, dans de nombreux cas, les opérations sont réalisées pour produire des éléments graphiques disjoints, c'est-à-dire ne présentant pas de recouvrement. Dans ce cas, l'utilisation d'un aplanissement ou d'une fusion avec gestion de canal alpha est indifférente. C'est par exemple le cas avec certaines des données de la variante de la figure 9 : les données Low_Img_Msk et High_Img_Msk sont totalement disjointes.

L'utilisation de la transparence et de la séparation des plans explique la principale différence entre la variante de la figure 8 et la variante de la figure 9 :
- sur la figure 8, le traitement est centré sur l'image Img, et l'on cherche à préserver les portions sombres de l'image Img qui doivent être "trouées" de modules "clairs". L'utilisation de la fonction LE() est judicieuse car la séparation en couches "claire" et "sombre" est complémentaire, et reconstitue l'image Img lorsque les plans sont fusionnés. L'utilisation d'autres outils que la fonction LE() dans cette variante pourrait donner des résultats différents ne préservant pas l'image Img dans le code 24;
- sur la figure 9, le traitement est centré sur l'information utile du code, et l'image Img est méthodique découpée selon les modules "clairs" et "sombres". Ici, la fonction LE() pourrait facilement être remplacée sans conséquence pour l'intégrité de l'image Img dans le code 24final.

Par ailleurs, en présence de données d'image, il est assez rare qu'il y ait des données d'arrière-plan ou d'avant-plan, ce qui rapproche encore ces modes de réalisation. En tout état de cause, les données d'avant-plan et d'arrière-plan peuvent être traitées comme des données d'image dans les variantes des figures 8 et 9.

En outre, l'ensemble des variantes et options décrites en rapport avec les figures 1 à 7 peuvent s'appliquer directement aux variantes des figures 8 et 9, y compris celles concernant la détection de groupe, l'utilisation de motifs divers pour les modules, et l'application de transformations. La principale différence concernant ces modes de réalisation est que le mode de réalisation des figures 1 à 7 gère différemment les images, et repose plus sur un aplanissement de calque, là où les variantes des figures 8 et 9 font usage de la transparence.

Des variations supplémentaires peuvent également être appliquées afin d'améliorer le rendu visuel de toutes les variantes décrites. En effet, la Demanderesse a découvert qu'il peut être avantageux de réappliquer tout ou une partie de l'arrière-plan, de l'avant-plan ou de l'image en tant qu'avant-plan sur le code préparé selon l'invention, avec une opacité faible, généralement inférieure à 75%. Cela permet, sans changer les informations complémentaires, d'homogénéiser le visuel de l'image.

Par ailleurs, la plupart des codes à lecture optique présentent des zones particulières qui contiennent des informations qui sont définies par le format et qui ne varient jamais. Ces zones sont en général appelées "pilote". Elles ont pour fonction de permettre à une application qui cherche à décoder le code à lecture optique de le placer selon une orientation prédéfinie, afin de le parcourir dans le bon ordre, et ce quelque soit l'orientation dans laquelle le code a été photographié.

Par exemple dans les codes de type QR-Code de base, il s'agit de trois zones situées dans les coins haut-gauche, haut-droit et bas-gauche, qui comprennent un premier carré d'informations "sombres", un deuxième carré d'informations "claires" inscrit dans le premier carré, et un carré plein d'informations "sombres" inscrit dans le deuxième carré. Ces pilotes sont visibles sur la figure 2 par exemple. Un dernier pilote est également inclus en bas vers la droite.

Dans certains formats de code à lecture optique, ces pilotes sont cruciaux car sans eux il n'est pas possible de lire le code correctement. Il peut donc être souhaité, par mesure de sécurité, de ne pas traiter les pilotes comme le reste des données du code. Cela peut être fait dans le cadre de l'invention en séparant les pilotes dans l'opération 710, comme cela est fait pour la matrice d'information. Ensuite, les pilotes sont aplanis en fonction de leur correspondance à une information sombre ou pas.

Par ailleurs, les combinaisons et aplanissements décrits ci-dessus sont prévus pour offrir un rendement visuel optimal pour le code 24. Cependant, d'autres solutions moins optimales visuellement peuvent être retenues, par exemple en inversant certains des aplanissements.

Il ressort de ce qui précède que la préparation du code repose sur l'alternance de couches de type graphique et de couches d'information qui sont associées à des informations opposées. Par exemple, on utilise un arrière-plan clair, sur lequel on aplanit des informations foncées, puis un avant-plan foncé et des informations complémentaires claires, etc. Les aplanissements, variations de motifs et d'effets sont libres, dès lors que cet aplanissement préserve l'information.

Cette préservation de l'information permet de réaliser une palette de personnalisations graphiques quasi infinie, chose qui était inimaginable jusqu'à présent. De plus, comme l'invention fonctionne en garantissant l'intégrité du code et des images, aucune étape de vérification ou de retouche n'est nécessaire.

Enfin, comme l'invention est compatible avec n'importe quelle image, quelles que soient ses dimensions, il devient extrêmement aisé d'incorporer un code à lecture optique dans tout support graphique, comme une affiche ou une publicité. Il suffit simplement de préciser la position relative de l'image, formant le support, et c'est cette image qui sera modifiée en intégrant le code. Ainsi, il n'y a plus d'une part un support visuel et d'autre part un code rapporté sur ce support, mais une réelle fusion du code et du support dans lequel **il** doit être intégré.

L'invention est bien entendu compatible avec des codes à lecture optique non bidimensionnels, tels les codes EAN-8, EAN-13, UPC-A, UPC-E, PDF-417 ou autres.

## Revendications

1. Image en deux dimensions comprenant un premier plan comprenant une transformation d'un motif représentatif d'un ou plusieurs modules dans une matrice d'informations codées, un code pour encoder et décoder ledit motif étant un code optique ;
dans laquelle la transformation est l'une parmi une transformation optique et une transformation géométrique desdits un ou plusieurs modules dans la matrice des informations codées qui laisse lesdites informations codées invariantes.

2. Image en deux dimensions selon la revendication 1, dans laquelle la transformation comprend une opération vectorielle.

3. Image en deux dimensions selon l'une des revendications 1 à 2, dans laquelle le code optique est conforme à une norme de codage et de décodage.

4. Image en deux dimensions selon la revendication 3, dans laquelle la norme de codage et de décodage est l'une parmi une norme QR, une norme NEA et une norme Datamatrix.

5. Image en deux dimensions selon l'une des revendications 1 à 4, dans laquelle le code optique code au moins l'un parmi une adresse Web (URL), un Identifiant Uniforme de Ressource (URI) et des informations alphanumériques.

6. Image en deux dimensions selon l'une des revendications 1 à 5, dans laquelle la transformation géométrique est l'une parmi une rotation autour d'un axe, une translation et une homothétie.

7. Image en deux dimensions selon l'une des revendications 1 à 6, dans laquelle la transformation optique est l'un parmi un éclairage, un assombrissement, un flou, un ombrage et un tremblement.

8. Image en deux dimensions selon l'une des revendications 1 à 7, comprenant en outre des zones réservées autour de sous-parties de la transformation des informations.

9. Image en deux dimensions selon l'une des revendications 1 à 8, comprenant en outre un second plan comprenant une image pictorale qui est l'un parmi un plan supérieur et un plan inférieur du premier plan.

10. Image en deux dimensions selon la revendication 9, dans laquelle l'image pictorale comprend l'une parmi une photo, une marque de fabrique et une marque commerciale.

11. Image en deux dimensions selon la revendication 9, dans laquelle des portions de l'image pictorale sont visibles entre des portions de transformations de parties des informations codées.

12. Image en deux dimensions selon la revendication 9, dans laquelle le premier plan est découpé en une première portion avec des teintes claires et une seconde portion avec des teintes foncées, le second plan est découpé en une première portion avec des teintes claires et une seconde portion avec des teintes foncées, la première portion du premier plan est l'un parmi un plan supérieur et un plan inférieur de la première portion et la seconde portion du premier plan est l'un parmi un plan supérieur et un plan inférieur de l'une parmi la première portion et la seconde portion du second plan.

13. Image en deux dimensions selon la revendication 12, dans laquelle la première portion et la seconde portion du second plan ont été produites par une inversion des caractéristiques de luminosité d'un second plan original.

14. Image en deux dimensions selon l'une des revendications 1 à 13, qui est générée par un processus informatique à partir d'un fichier source stocké sur un support informatique permanent, ledit fichier source comprenant :
des informations qui doivent être encodées grâce à un code optique ;
au moins un paramètre définissant au moins l'une parmi une transformation optique et une transformation géométrique desdites informations.

15. Fichier source stocké sur un support informatique permanent, ledit fichier source comprenant :
des informations à encoder avec un code optique dans un ou plusieurs modules dans une matrice, ledit code optique pouvant être utilisé pour décoder les informations ;
au moins un paramètre définissant au moins l'une parmi une transformation optique et une transformation géométrique à appliquer à ladite pluralité de modules dans la matrice desdites informations qui laisse lesdites informations codées invariantes.

16. Fichier source selon la revendication 15, dans lequel le code optique est conforme à une norme de codage et de décodage.

17. Fichier source selon la revendication 16, comprenant en outre une image pictorale.

18. Fichier source selon la revendication 17, dans lequel l'image est découpée en une première portion avec des teintes claires et une seconde portion avec des teintes foncées.
